# EUROPÄISCHE PATENTSCHRIFT

(11) **EP 3 393 121 B1**
(45) Veröffentlichungstag und Bekanntmachung des Hinweises auf die Patenterteilung: **22.06.2022**
(21) Anmeldenummer: 18163221.7
(22) Anmeldetag: 22.03.2018
(51) Int. Cl.: H04N 5/232

(54) **SYSTEM MIT EINER KAMERA UND EINER ÜBERTRAGUNGSEINRICHTUNG UND VERFAHREN**
SYSTEM COMPRISING A CAMERA AND A TRANSFER DEVICE AND METHOD
SYSTÈME DOTÉ D'UNE CAMÉRA ET D'UN DISPOSITIF DE TRANSMISSION ET PROCÉDÉ

(30) Priorität: 20.04.2017 DE 102017108406
(43) Veröffentlichungstag der Anmeldung: 24.10.2018
(73) Patentinhaber: IDS Imaging Development Systems GmbH, 74182 Obersulm (DE)
(72) Erfinder: Balz, Alexander, 74182 Obersulm (DE)
(74) Vertreter: Patentanwälte Bregenzer und Reule Partnerschaftsgesellschaft mbB

(56) Entgegenhaltungen:
- CN-U- 205 754 459
- "Universal serial bus interfaces for data and power - Part 1-3: Universal Serial Bus interfaces - Common components - USB Type-C™ cable and connector specification", IEC 62680-1-3:2016, IEC, 3, RUE DE VAREMBÉ, PO BOX 131, CH-1211 GENEVA 20, SWITZERLAND, 17. August 2016 (2016-08-17), Seiten 1-173, XP082000089, [gefunden am 2016-08-17]

## Beschreibung

Die Erfindung betrifft ein System gemäß dem Oberbegriff des Anspruchs 1 zur Erfassung und digitalen Übertragung von Bilddaten sowie ein Verfahren gemäß Oberbegriff des Anspruches 15.

Ein solches System ist in CN 205 754 459 U erläutert.

Zum Anschluss von Kameras, insbesondere Industriekameras, an ein übergeordnetes System, beispielsweise eine Überwachungseinrichtung, eine Steuerung für eine Maschine oder dergleichen, werden beispielsweise USB-Kabel verwendet. Über die USB-Daten-Busleitungen können Bilddaten mit hoher Übertragungsgeschwindigkeit von der Kamera zur übergeordneten Einrichtung übertragen werden. Für das USB-Protokoll bzw. die zugeordneten USB-Kabel und USB-Leitungen gibt es verschiedene Standards, beispielsweise USB 2.0 und USB 3.0. Damit die Kamera zu vorbestimmten Zeitpunkten die Bilddaten erfasst, hat sie in der Regel einen Triggeranschluss, über welchen anhand eines Triggersignals der Sensor zur Bilderfassung angesteuert werden kann. Es ist auch möglich, dass ein mit dem Sensor kommunizierender Prozessor über das Triggersignal zu einer Bilderfassung und/oder zu einem Senden der Bilddaten angesteuert wird. Allerdings ist der Verkabelungsaufwand durchaus erheblich.

Es ist daher die Aufgabe der vorliegenden Erfindung, ein System umfassend eine Kamera sowie eine Übertragungseinrichtung, eine Kamera, eine Übertragungseinrichtung sowie ein Verfahren bereit zu stellen, mit denen eine vereinfachte Triggersignal-Übertragung zu der Kamera möglich ist.

Zur Lösung der Aufgabe ist ein System gemäß der technischen Lehre des Anspruchs 1 vorgesehen.

Das erfindungsgemäße Verfahren entspricht der technischen Lehre des Anspruchs 15.

Die Kamera ist vorzugsweise eine Industriekamera. Die Kamera ist eine digitale Kamera. Die Kamera weist einen Bildsensor zur Erfassung von Bilddaten auf.

Die Kamera und die Übertragungseinrichtung können einen oder mehrere Übertragungsanschlüsse zum Übertragen des Triggersignals aufweisen. Weiterhin kann die Kamera eine oder mehrere, beispielsweise mindestens zwei, Kamera-USB-Busschnittstellen aufweisen. Dasselbe gilt auch für die Übertragungseinrichtung, die eine oder mehrere Übertragung-USB-Busschnittstellen, beispielsweise mindestens zwei Kamera-USB-Busschnittstellen, aufweisen kann.

Es ist ein Grundgedanke der vorliegenden Erfindung, dass das USB-Kabel auch zur Übertragung des Triggersignals verwendet wird. Dazu ist eine Konfiguration zweckmäßig, derart, dass der Kamera-Buscontroller und der Übertragung-Buscontroller sich verständigen, dass über die Übertragungsleitung das Triggersignal übertragbar ist. Es sind mehrere Varianten möglich, wie diese Konfiguration abläuft. Beispielsweise ist es möglich, dass der Übertragung-Buscontroller an den Kamera-Buscontroller eine Konfigurationsnachricht schickt, mit der der Übertragungsanschluss der Kamera zum Empfang des Triggersignals über die Übertragungsleitung konfiguriert wird. Es ist aber auch möglich, dass die Kamera sozusagen die Initiative ergreift, nämlich ein Meldesignal an die Übertragungseinrichtung sendet, mit der sie ihre Bereitschaft zum Empfang des Triggersignals an den Übertragungsanschluss signalisiert. Diese Meldenachricht kann beispielsweise beim erstmaligen Anschluss des USB-Kabels an die Kamera gesendet werden. Es ist auch möglich, dass die Kamera und/oder die Übertragungseinrichtung eine entsprechende Konfigurationsnachricht zyklisch, insbesondere in vorbestimmten Abständen, versenden.

Es ist auch möglich, dass die Übertragungseinrichtung bei der Kamera sozusagen zuerst anfragt, ob eine Konfiguration des Übertragungsanschlusses der Kamera für den Empfang eines Triggersignals überhaupt möglich ist. Diese Abfrage kann auch durch einen vorbestimmten Funktionscode geschehen.

Die Kommunikation bzw. Konfiguration kann zur Übertragung des Triggersignals oder eines Triggersignals von der Übertragungseinrichtung zu der Kamera dienen, aber auch umgekehrt. Die obigen Erläuterungen und die nachfolgenden Erläuterungen betreffen also auch die Kommunikationsrichtung von der Kamera zu der Übertragungseinrichtung.

Auch die Kamera kann nämlich ein Triggersignal zu Übertragungseinrichtung senden, beispielsweise zur Ansteuerung mindestens einer weiteren Kamera und/oder zur Ansteuerung mindestens einer Beleuchtungseinrichtung, insbesondere Blitzgeräten, oder anderen die Aufnahme von Bildern unterstützenden Vorrichtungen. So kann das Triggersignal beispielsweise ein Auslöser für einen Blitz oder eine Beleuchtungseinrichtung, beispielsweise eine Leuchte, sein.

Die Übertragungseinrichtung ist zur Ausgabe des von der Kamera erhaltenen Triggersignals beispielsweise an einem Triggeranschluss ausgestaltet. Es ist aber auch möglich, dass die Übertragungseinrichtung das Triggersignal über einen weiteren Anschluss ausgibt, beispielsweise über einen USB-Anschluss.

Es ist möglich, dass die Kamera zur Konfiguration der Übertragungseinrichtung zur Übertragung des Triggersignals ausgestaltet ist. Es muss also nicht so sein, dass die Übertragungseinrichtung die Kamera zur Übertragung von Triggersignalen über das USB-Kabel konfiguriert, sondern dass die Kamera von sich aus die Übertragungseinrichtung zur Übertragung von Triggersignalen konfiguriert, also beispielsweise entsprechende Konfigurationsnachrichten an die Übertragungseinrichtung sendet. Die obigen oder nachfolgenden Erläuterungen zur Konfiguration der Kamera durch die Übertragungseinrichtung gelten als auch umgekehrt, d. h. zur Konfiguration der Übertragungseinrichtung durch die Kamera.

Das Triggersignal umfasst z.B. digitale Impulse, Spannungswechsel oder dergleichen. Das Triggersignal ist vorzugsweise ein analoges Signal. Das Triggersignal ist zweckmäßigerweise kein Bussignal und/oder enthält keine Busnachrichten.

Ein Busleitungsanschlusspaar soll nachfolgend so verstanden werden, dass beispielsweise ein Sendekontakt und ein Empfangskontakt jeweils als Busleitungsanschlusspaar verstanden werden. Vom Sendekontakt der Übertragungseinrichtung werden beispielsweise Busnachrichten an einen Empfangskontakt der Kamera bzw. der Kamera-USB-Busschnittstelle gesendet und umgekehrt von einem Sendekontakt der Kamera-USB-Schnittstelle werden Daten zu einem Empfangskontakt eines Busleitungsanschlusspaares der Übertragung-USB-Busschnittstelle der Übertragungseinrichtung gesendet.

Bei den USB-Daten-Busleitungen handelt es sich beispielsweise um Daten-Busleitungen des USB 2.0-Standards oder des USB-3.0-Standards oder USB-3.1-Standards. Es ist auch möglich, dass spätere, hier zum Anmeldezeitpunkt noch nicht bekannte USB-Standards zur Datenübertragung über ein aktuelles oder zukünftiges USB-Protokoll verwendet werden.

Die Übertragungsleitung ist zweckmäßigerweise als eine sekundäre Busleitung ausgebildet. Über die sekundäre Busleitung können Busnachrichten versendet werden, die nicht dem USB-Standard oder einem USB-Standard entsprechen. Mithin ist die Übertragungsleitung zweckmäßigerweise eine nicht für USB-Busnachrichten nutzbare Leitung. Es versteht sich aber, dass auch auf dieser sekundären Busleitung prinzipiell mit einem USB-Protokoll kommuniziert werden könnte, sofern dies zwischen der Übertragungseinrichtung und der Kamera sozusagen vereinbart ist oder für die beiden Komponenten festgelegt ist.

Weiterhin zweckmäßig ist es, wenn die Übertragungsleitung eine nicht dem USB 2.0-Standard entsprechende Leitung ist oder eine solche Leitung umfasst. Mithin ist es auch möglich, dass beispielsweise über einen USB-3.0-Leitung oder dergleichen als Übertragungsleitung zwischen der Kamera und der Übertragungseinrichtung zur Übertragung des Triggersignals kommuniziert wird.

Es ist aber auch möglich, dass eine für USB-Busnachrichten nutzbare Übertragungsleitung zur Übertragung des Triggersignals genutzt wird. Beispielsweise ist eine USB-3.0-Leitung, beispielsweise eine Sendung zu einem Sendeanschluss oder Empfangsanschluss der Kamera-USB-Busschnittstelle führende Leitung zur Übertragung des Triggersignals nutzbar.

Die Konfigurationsleitung ist zweckmäßigerweise eine Konfigurationsleitung, die ausschließlich zur Übertragung von Konfigurationsnachrichten geeignet ist. Die Konfigurationsnachricht kann im einfachsten Fall ein einfaches Schaltsignal sein, beispielsweise eine bestimmte digitale Schaltsignalfolge. Bevorzugt ist jedoch, dass auf der Konfigurationsleitung bzw. auf den Konfigurationsleitungsanschlüssen ein spezielles Konfigurationsprotokoll übertragen oder verwendet wird.

Insbesondere ist es vorteilhaft, wenn die Kamera-Anschlusskontakte und/oder die Übertragung-Anschlusskontakte Anschlusskontakte für eine elektrische Energieübertragung oder Stromversorgung der Kamera über das USB-Kabel aufweisen. Somit können also über das USB-Kabel sowohl die Datenübertragung der Bilddaten erfolgen als auch die Übertragung des Triggersignals und schließlich auch eine Energieversorgung der Kamera. Es ist insbesondere nur ein einziges USB-Kabel notwendig, um die Kamera mit der Übertragungseinrichtung und vorzugsweise einer übergeordneten Einrichtung zu verbinden.

Erfindungsgemäß entsprechen das USB-Kabel und die Kamera-Anschlusskontakte und die Übertragung-Anschlusskontakte dem USB-3.1-Standard oder dem USB-Typ-C-Standard. Somit kann eine genormte Schnittstelle verwendet werden, um die erfindungsgemäße Konfiguration der Übertragungsleitung zum Senden und Empfangen des Triggersignals zu konfigurieren.

Die Konfigurationsleitung ist zweckmäßigerweise eine Busleitung, beispielsweise eine CC1- oder CC2-Leitung. Die Konfigurationsnachrichten sind beispielsweise USB-Busnachrichten oder Nicht- USB-Nachrichten. Die Konfigurationsnachrichten können einem proprietären Protokoll zwischen der Übertragungseinrichtung und der Kamera kommuniziert werden. Dabei ist es möglich, dass an die Konfigurationsleitung auch Buscontroller einer Übertragungskomponente, beispielsweise des USB-Kabels angeschlossen sind. Die Buscontroller beispielsweise des USB-Kabels hören zwar die Busnachrichten bzw. Konfigurationsnachrichten zwischen der Übertragungseinrichtung und der Kamera mit, lassen diese aber transparent passieren.

Die Erfindung umfasst ferner eine Übertragungseinrichtung zur Kommunikation mit einer Kamera gemäß Anspruch 1. Die Übertragungseinrichtung weist eine Übertragung-USB-Busschnittstelle mit einem Übertragung-Buscontroller sowie Übertragung-Anschlusskontakten für ein USB-Kabel auf. Die USB-Übertragung-Busschnittstelle hat mindestens ein Busleitungsanschlusspaar zum Anschluss von USB-Daten-Busleitungen zum digitalen Empfangen von Bilddaten als USB-Nachrichten. Die Übertragung-Anschlusskontakte weisen einen Konfigurationsleitungsanschluss zum Anschluss einer Konfigurationsleitung des USB-Kabels und einem Übertragungsanschluss für eine Übertragungsleitung des USB-Kabels auf. Der Übertragungs-Buscontroller ist vorzugsweise zum Senden, insbesondere aber auch zum Empfangen von Konfigurationsnachrichten über den Konfigurationsleitungsanschluss ausgestaltet. Der Übertragungsanschluss für die Übertragungsleitung ist zum Übertragen des Triggersignals anhand der Konfigurationsnachrichten konfigurierbar, wobei der Übertragungs-Buscontroller zum Senden des Triggersignals an die Kamera ausgestaltet ist.

Die Übertragungseinrichtung kann beispielsweise ein Computer sein oder ein Bestandteil eines Computers bilden. Es ist weiterhin möglich, dass die Übertragungseinrichtung in der Art eines Kabels ausgestaltet ist. Weiterhin weist die Übertragungseinrichtung zweckmäßigerweise ein Gehäuse auf, an dem eine oder mehrere USB-Busschnittstellen vorhanden sind. Beispielsweise handelt es sich bei der Übertragungseinrichtung um einen sogenannten Hub. Die Übertragungseinrichtung kann auch ein sogenanntes Dock sein oder umfassen.

Bevorzugt ist es, wenn die Übertragungseinrichtung mindestens einen Triggeranschluss zum Einspeisen eines Triggersignals aufweist, wobei der Triggeranschluss mit dem mindestens einen Übertragungsanschluss verbunden oder verknüpft oder verbindbar oder verknüpfbar ist. Alternativ oder ergänzend weist die Übertragungseinrichtung einen Triggeranschluss zum Ausgeben eines Triggersignals auf, wobei der Triggeranschluss mit dem mindestens einen Übertragungsanschluss verknüpft oder verbunden oder verbindbar oder verknüpfbar ist.

Dabei ist es möglich, dass ein einziger Übertragungsanschluss und ein einziger Triggeranschluss vorhanden sind. Es können bei der Übertragungseinrichtung aber auch beliebige Kombinationen von Triggeranschluss und Übertragungsanschluss, beispielsweise zwei oder mehr Triggeranschlüsse und ein einziger Übertragungsanschluss, ein Triggeranschluss und zwei oder mehr Übertragungsanschlüsse oder auch mehrere Triggeranschlüsse und mehrere Übertragungsanschlüsse, vorgesehen sein. Wenn die Übertragungseinrichtung nur einen Übertragungsanschluss aufweist und einen oder mehrere Triggeranschlüsse, kann man sie auch als einen Repeater bezeichnen.

An einen Triggeranschluss ist beispielsweise ein Trigger-Empfänger, zum Beispiel eine Beleuchtungseinrichtung, ein Blitzgerät, eine weitere Kamera oder dergleichen, anschließbar.

An einen Triggeranschluss kann ein Trigger-Geber angeschlossen werden, beispielsweise ein elektrischer Schalter, ein Sensor oder dergleichen.

Es ist möglich, dass ein und derselbe Triggeranschluss wahlweise zur Einspeisung eines Triggersignals oder zur Ausgabe eines Triggersignals konfigurierbar ist.

So kann der Triggeranschluss beispielsweise galvanisch direkt mit dem Übertragungsanschluss verbunden sein. Es ist aber auch eine insbesondere logische Verknüpfung beispielsweise über einen Prozessor möglich, der die USB-Busschnittstelle für die Kamera bedient. Mithin reicht also auch eine Verknüpfung des Triggeranschlusses mit dem Übertragungsanschluss, ohne dass eine unmittelbare elektrische Verbindung vorhanden ist.

Es ist vorteilhaft, wenn zwischen dem mindestens einen Triggeranschluss und dem Übertragungsanschluss ein galvanisches Trennelement, beispielsweise eine Optokoppler oder dergleichen, angeordnet ist. Somit ist eine galvanische Trennung zwischen einerseits dem eingehenden Triggersignal und andererseits dem ausgehenden Triggersignal, welches an die Kamera versendet wird, vorhanden.

Ein Optokoppler kann prinzipiell bidirektional wirken, d. h. dass ein Eingangssignal am Triggeranschluss auf den Übertragungsanschluss galvanisch getrennt übertragbar ist oder umgekehrt ein Triggersignal, welches über den Übertragungsanschluss empfangen wurde, über den Optokoppler oder ein sonstiges galvanische Trennelement an dem Triggeranschluss ausgegeben wird.

Bevorzugt ist es, wenn die Übertragungseinrichtung eine Stromversorgungseinrichtung zur Bereitstellung einer Stromversorgung an die Übertragung-USB-Busschnittstellen angeschlossene Kameras oder mindestens eine an die Übertragung-USB-Busschnittstelle angeschlossene Kamera aufweist. Beispielsweise umfasst die Stromversorgungseinrichtung Anschlusskontakte zur Bereitstellung einer Versorgungsspannung. Somit kann eine externe Stromquelle oder Spannungsquelle verwendet werden, um die Übertragung-USB-Busschnittstellen und letztlich auch die Kameras mit Strom bzw. elektrischer Energie zu versorgen. Es ist aber auch möglich, dass ein Netzgerät oder ein Spannungsadaptionsgerät oder eine derartige Einrichtung einen Bestandteil der Übertragungseinrichtung bildet, um die Übertragung-USB-Busschnittstellen mit Strom bzw. elektrischer Energie zu versorgen.

Weiterhin zweckmäßig ist es, wenn die Übertragungseinrichtung sozusagen als ein Hub dient und/oder eine Sammel-USB-Busschnittstelle zum Anschluss einer Kommunikationseinrichtung aufweist. Die Kommunikationseinrichtung ist beispielsweise ein Überwachungscomputer oder dergleichen. Die Sammel-USB-Busschnittstelle ist zweckmäßigerweise mit mindestens zwei Übertragung-USB-Busschnittstellen zum Anschließen von zwei Kameras gemäß der Erfindung verbunden, wobei über die Sammel-USB-Busschnittstelle über die Übertragung-USB-Schnittstelle von der jeweiligen Kamera empfangene Bilddaten an die Kommunikationseinrichtung übertragbar sind. Dabei ist es möglich, dass diesen zwei oder weiteren Übertragung-USB-Busschnittstellen beispielsweise die Stromversorgungseinrichtung und/oder ein jeweiliger Triggeranschluss der Übertragungseinrichtung zugeordnet sind. Das muss aber nicht sein. Es ist beispielsweise möglich, dass die über die Sammel-USB-Schnittstelle angeschlossenen Übertragung-USB-Busschnittstellen nicht anhand separater Triggeranschlüsse triggerbar sind.

Es ist möglich, dass die Sammel-USB-Busschnittstelle einen Triggeranschluss für die Kommunikationseinrichtung aufweist, welcher mit einem oder mehreren Triggeranschlüssen der Übertragung-USB-Busschnittstellen verbunden ist. Bevorzugt ist es, wenn die Übertragungseinrichtung mindestens zwei Übertragung-USB-Busschnittstellen zum Anschließen von zwei Kameras gemäß der Erfindung aufweist. Somit kann das erfindungsgemäße Konzept auch für eine Anordnung von zwei und weiteren Kameras über einen einzige Übertragungseinrichtung genutzt werden.

Zwischen den mindestens zwei Übertragung-USB-Busschnittstellen ist zweckmäßigerweise eine Matrixlogik, insbesondere eine parametrierbare oder konfigurierbare Matrixlogik, angeordnet, über die die mindestens zwei Übertragung-USB-Busschnittstellen einander zuordenbar sind und/oder mindestens einem Triggeranschluss zuordenbar sind, beispielsweise einem Triggeranschluss zur Ausgabe eines Triggersignals und/oder einem Triggeranschluss zur Eingabe oder Einspeisung eines Triggersignals. Über eine derartige Matrixlogik können die Übertragung-USB-Busschnittstellen auch der bereits erläuterten Sammel-USB-Busschnittstelle zugeordnet werden.

Die Matrixlogik umfasst oder enthält beispielsweise programmierbare Schaltkreise, ein FPGA oder dergleichen.

Beispielsweise ist es möglich, dass ein steuernder PC oder eine sonstige Steuerungseinrichtung über eine Parametrierschnittstelle, insbesondere eine USB-Schnittstelle, die Matrixlogik konfiguriert.

Die Übertragungseinrichtung kann für an einer USB-Busschnittstelle empfangene Triggersignale und/oder an der USB-Busschnittstelle auszugebende Triggersignale sozusagen ein Gateway bilden.

So kann beispielsweise ein Triggersignal, welches über die eine Übertragung-USB-Busschnittstelle von der Übertragungseinrichtung empfangen wurde, über die Matrixlogik beispielsweise einer anderen Übertragung-USB-Busschnittstelle oder der anderen Übertragung-USB-Busschnittstelle zugeordnet werden. Beispielsweise kann ein von einer Kamera empfangenes Triggersignal über die Matrixlogik einer anderen Kamera zugeführt werden, zum Beispiel um diese andere Kamera auszulösen und/oder zur Erfassung von Bilddaten anzusteuern. Ohne weiteres ist es möglich, dass ein derartiges Triggersignal sozusagen dupliziert oder vervielfältigt wird. Es ist beispielsweise möglich, dass ein über die eine Übertragung-USB-Busschnittstelle empfangenes Triggersignal über die Matrixlogik an mindestens zwei Übertragung-USB-Busschnittstellen ausgegeben bzw. über diese Busschnittstellen übertragen wird. So kann beispielsweise eine Kamera ein Triggersignal an die Übertragungseinrichtung senden, welches dieses Triggersignal an mehrere weitere Kameras, beispielweise mindestens zwei weitere Kameras, über die jeweilige Übertragung-USB-Busschnittstelle, ausgibt.

Es ist aber auch möglich, dass ein Triggersignal, welches von dem mindestens einen Triggeranschluss erhalten wurde, über die Matrixlogik zwei oder weiteren Übertragung-USB-Busschnittstelle zugeordnet wird, beispielsweise um mehrere Kameras, insbesondere mindestens zwei Kameras, auszulösen.

Weiterhin ist es möglich, dass über voneinander verschiedene Übertragung-USB-Busschnittstellen empfangene Triggersignale, beispielsweise von verschiedenen Kameras empfangene Triggersignale, an demselben Triggeranschluss ausgegeben werden, beispielsweise um eine Beleuchtungseinrichtung anzusteuern.

Ein Optokoppler ist zweckmäßigerweise auch bei der nachfolgenden vorteilhaften Konfiguration vorhanden, insbesondere sind mehrere derartige Optokoppler vorgesehen.

Es ist zweckmäßig, wenn die Übertragungseinrichtung mindestens zwei Triggeranschlüsse zum Einspeisen und/oder Ausgeben von Triggersignalen aufweist, wobei diesen Triggeranschlüssen zweckmäßigerweise galvanische Trennelemente gemäß der obigen Beschreibung zugeordnet sind.

Zwischen den mindestens zwei Triggeranschlüssen und mindestens einer Übertragung-USB-Busschnittstelle, zweckmäßigerweise mehreren oder mindestens zwei Übertragung-USB-Busschnittstellen, ist zweckmäßigerweise eine Matrixlogik angeordnet, über welche die Triggeranschlüsse der Übertragung-USB-Busschnittstelle oder den Übertragung-USB-Schnittstellen zuordenbar sind. Die Zuordnung kann auch eine feste bzw. fest konfigurierte Zuordnung sein. Sie kann aber auch über eine Parametrierschnittstelle einstellbar sein. Somit ist es möglich, einen jeweiligen Triggeranschluss beispielsweise per Software, anhand von Steckkontakten oder dergleichen, einer jeweiligen Übertragung-USB-Busschnittstelle zuzuordnen.

Die Matrixlogik kann auch dazu dienen, die Stromversorgungseinrichtung einer jeweiligen Übertragung-USB-Busschnittstelle zuzuordnen.

Die Erfindung kann vorsehen, dass die Übertragungseinrichtung den Konfigurationsleitungsanschluss sozusagen selbst bedient und/oder die Konfigurationsnachrichten zur Konfiguration der Übertragungsleitung zum Übertragen des Triggersignals selbst erzeugt.

Die Übertragungseinrichtung kann aber auch eine Art Gateway in Bezug auf die Konfiguration der Übertragungsleitung sein.

Es ist zum Beispiel möglich, dass die Übertragungseinrichtung eine Konfigurationsschnittstelle, eine USB-Schnittstelle oder dergleichen aufweist, über die sie Konfigurationsnachrichten empfangen und an den jeweiligen Konfigurationsleitungsanschluss über den jeweiligen Übertragung-Buskontroller weiterleiten kann. Auch von der Kamera an dem USB-Übertragungsanschluss empfangene Konfigurationsnachrichten kann die Übertragungseinrichtung bei dieser Ausgestaltung an die Konfigurationsschnittstelle weitergeben.

Die Konfigurationsschnittstelle kann auch dazu dienen, die mindestens eine Übertragung-USB-Busschnittstelle zum Übertragen des Triggersignals, also zum Empfangen und/oder Senden des Triggersignals und/oder Durchleiten des Triggersignals, zu konfigurieren.

Die Konfiguration der Übertragung-USB-Busschnittstelle kann, muss aber nicht unbedingt an dieser selbst erfolgen, d. h. dass beispielsweise ein Buskontroller der Übertragung-USB-Busschnittstelle über die Konfigurationsschnittstelle eingestellt wird.

Es ist nämlich auch möglich, dass beispielsweise ein Triggereingang und/oder ein Triggerausgang der Übertragungseinrichtung mit der Übertragungsleitung des USB-Kabels logisch und/oder elektrisch verknüpft wird. Die Übertragung-USB-Busschnittstelle kann insbesondere unverändert bleiben, d. h. dass Übertragung-USB-Busschnittstelle und/oder der diese Schnittstelle dienende oder darstellende Buskontroller sozusagen gar nicht weiß, dass über die Übertragung-USB-Busschnittstelle übertragen werden. Die Übertragung-USB-Busschnittstelle kann also nur eine Art Gateway für das jeweilige Triggersignal sein, welches von der Übertragungseinrichtung an anderer Stelle ausgegeben und/oder von anderer Stelle empfangen wird. So kann beispielsweise über die Konfigurationsschnittstelle die Matrixlogik oder eine sonstige Zuordnungslogik so eingestellt sein, dass sie ein an einem Triggereingang empfangenes Triggersignal an die Übertragung-USB-Busschnittstelle weiterleitet, welche ihrerseits wiederum das Triggersignal über den Übertragungsanschluss transparent weiter überträgt. Dabei muss die Übertragung-USB-Busschnittstelle gar nicht wissen, dass sie ein Triggersignal auf dem Übertragungsanschluss bzw. über die Übertragungsleitung überträgt, sondern das Triggersignal lediglich weiterleiten.

Es ist auch möglich, dass auf diesem Wege Übertragung-USB-Busschnittstellen der Übertragungseinrichtung einander zur Übertragung des Triggersignals zugeordnet werden, sodass beispielsweise eine Kamera über die Übertragungsleitung des USB Kabels, mit dem sie an die Übertragungseinrichtung angeschlossen ist, eine Triggersignal an die Übertragungseinrichtung sendet, welche ihrerseits das Triggersignal an der anderen Übertragung-USB-Busschnittstelle für die andere Kamera ausgibt, die über ein weiteres USB-Kabel an die Übertragung-USB-Busschnittstelle angeschlossen ist. Die beiden Übertragung-USB-Busschnittstellen müssen in diesem Fall nicht speziell konfiguriert sein, dass sie die Übertragungsleitungen für die Übertragung des Triggersignals nutzen. Die Übertragung-USB-Busschnittstellen sind für das Triggersignal sozusagen transparent.

Auch die Kamera-USB-Busschnittstelle kann für das Triggersignal sozusagen transparent sein. So ist es beispielsweise möglich, dass die Kamera über die Kamera-USB-Busschnittstelle als Konfigurationsnachricht ihre Identität an die Übertragungseinrichtung sendet, welche diese an die Kommunikationseinrichtung weiterleitet, sodass die an die Konfigurationsschnittstelle angeschlossene Konfigurationseinrichtung, beispielsweise eine Kommunikationseinrichtung, sozusagen erkennt, dass die Kamera für die Übertragung von Triggersignalen über die Übertragungsleitung des USB-Kabels geeignet ist. Die Kommunikationseinrichtung konfiguriert dann die Übertragungseinrichtung derart, dass sie das Triggersignal auf der Übertragungsleitung empfangen und/oder senden kann.

An die Konfigurationsschnittstelle ist beispielsweise die bereits erläuterte Kommunikationseinrichtung, zum Beispiel der Überwachungscomputer, angeschlossen. Die Konfigurationsschnittstelle wird beispielsweise von der Sammel-USB-Busschnittstelle gebildet oder bereitgestellt.

Bevorzugt weist die Übertragungseinrichtung einen Prozessor auf, beispielsweise zur Konfiguration der erläuterten Matrixlogik, zur Ansteuerung der mindestens einen Übertragung-USB-Busschnittstelle im Zusammenhang mit der Konfiguration zum Empfang und/oder Senden des Triggersignals oder dergleichen.

Weiterhin betrifft die Erfindung eine Kamera, die insbesondere als Industriekamera ausgestaltet ist. Die Kamera hat einen Sensor zur digitalen Erfassung von Bilddaten und eine Kamera-USB-Busschnittstelle mit einem Kamera-Buscontroller sowie Kamera-Anschlusskontakten, insbesondere Typ C-Anschlusskontakten. Die Kamera-USB-Busschnittstelle weist mindestens ein Busleitungsanschlusspaar zum Anschluss von USB-Daten-Busleitungen zum digitalen Senden der Bilddaten als USB-Nachrichten auf.

Weiterhin ist vorteilhaft ein Triggereingang an der Kamera vorgesehen, der zum Auslösen einer Erfassung der Bilddaten durch den Sensor anhand eines Triggersignals dient.

Nachfolgend werden Ausführungsbeispiele der Erfindung anhand der Zeichnung erläutert. Es zeigen:

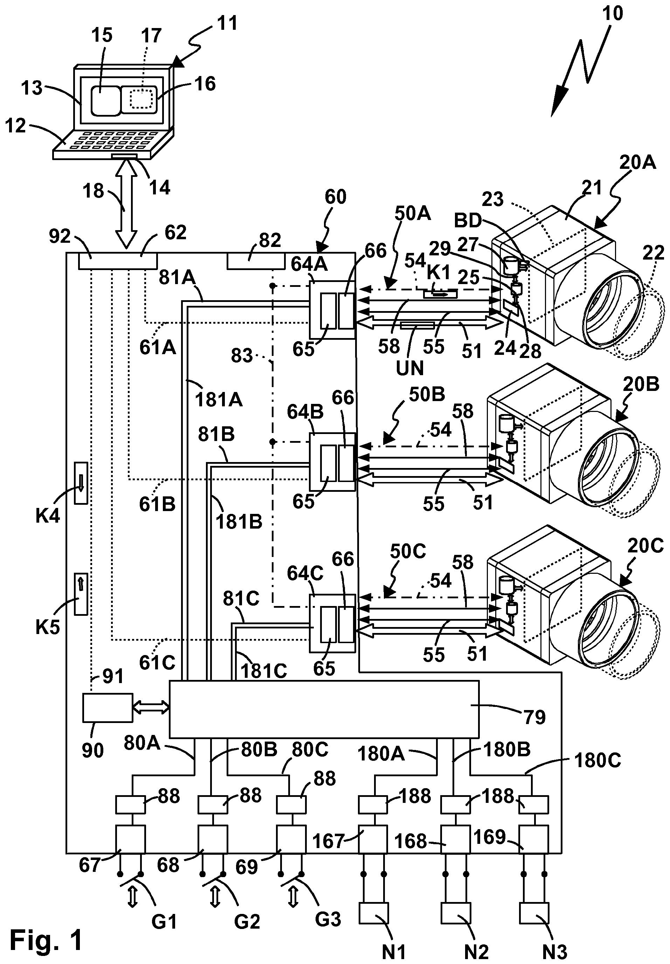

- Figur 1: eine teilweise schematische Darstellung eines erfindungsgemäßen Systems,
- Figur 2: Kamera-Anschlusskontakte oder Übertragung-Anschlusskontakte einer Kamera bzw. einer Übertragungseinrichtung des Systems gemäß Figur 1 und
- Figur 3: eine schematische Darstellung einer Kommunikationsverbindung der Übertragungseinrichtung gemäß Figur 1 über ein USB-Kabel zu einer der Kameras des Systems aus Figur 1.

Ein System 10 umfasst beispielsweise eine Kommunikationseinrichtung 11, insbesondere eine Überwachungseinrichtung, einen Computer oder dergleichen, an den Kameras 20A, 20B und 20C anzuschließen sind. Die Kommunikationseinrichtung 11 weist beispielsweise Eingabemittel 12, beispielsweise Tastatur, Spracherkennung, Maus oder dergleichen auf, sowie Ausgabemittel 13, beispielsweise einen Monitor, akustische Ausgabemittel oder dergleichen. Somit können beispielsweise an dem Ausgabemittel 13 Bilddaten der Kameras 20A, 20B oder 20C ausgegeben werden.

Die Kommunikationseinrichtung 11 weist beispielsweise einen Prozessor 15 zum Ausführen von Programmcode von einem oder mehreren Programmmodulen 17 auf, die in einem Speicher 16 gespeichert sind. Ein derartiges Programmmodul 17 kann beispielsweise Bilddaten der Kameras 20A, 20B und 20C aufbereiten, auswerten oder dergleichen. Die Kommunikationseinrichtung 11 kommuniziert über eine Busschnittstelle 14 mit den Kameras 20A, 20B und 20C, nämlich über eine USB-Verbindung 18. Denkbar wäre nun eine Konfiguration bei der beispielsweise jede der Kameras 20A, 20B und 20C über eine separate USB-Verbindung mit der Kommunikationseinrichtung 11 kommuniziert. Vorliegend ist jedoch die Kommunikationseinrichtung 11 über eine Übertragungseinrichtung 60 mit den Kameras 20A, 20B und 20C verbunden.

Eine jeweilige Kamera 20A, die nachfolgend als Kamera 20 bezeichnet wird, weist beispielsweise ein Gehäuse 21 auf, an dem ein Objektiv 22 angeordnet ist. Durch das Objektiv 22 gelangen Bildinformationen zu einem Sensor 23 im Gehäuse 21 der Kamera 20, so dass dieser Bilddaten BD erzeugen kann.

Die Kamera 20 weist einen Kamera-USB-Busschnittstelle 24 auf, an die ein USB-Kabel 50 anschließbar ist. Das USB-Kabel 50 ist beispielsweise ein USB-Kabel mit dem Daten nach dem USB-3.0 oder 3.1-Standard übertragbar sind. Beispielsweise hat es Steckverbinder 57A, 57B, die dem Typ-C-Standard entsprechen.

Die Kamera 20 weist weiterhin einen Kamera-Buscontroller 25 zur Bedienung der Kamera-USB-Busschnittstelle 24 auf, der mit Kamera-Anschlusskontakten 26 der Kamera-USB-Busschnittstelle 24 verbunden ist.

Die vom Sensor 23 erzeugten Bilddaten BD können beispielsweise durch einen Bildprozessor 27 vorverarbeitet beispielsweise komprimiert, gefiltert oder dergleichen werden. Es ist aber auch möglich, dass der Sensor 23 unmittelbar mit dem Kamera-Buscontroller 25 und/oder der Kamera-USB-Busschnittstelle 24 verbunden ist.

Vorliegend ist exemplarisch und nicht einschränken zu verstehen eine Kommunikation des Bildprozessors 24 über eine Verbindung 29 mit dem Kamera-Buscontroller 25 dargestellt, der seinerseits über eine Verbindung 29, die selbstverständlich mehrere Leitungen umfassen kann, mit den Kamera-Anschlusskontakten 26 verbunden ist.

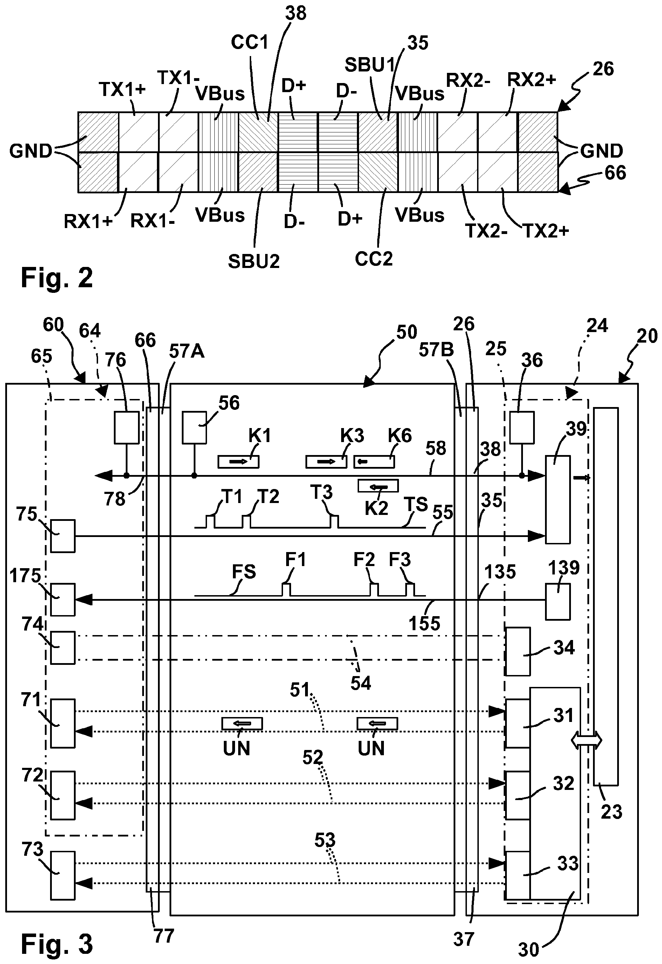

Beispielhaft in Figur 3 ist dargestellt, dass der Sensor 23 auch direkt mit einer Datenschnittstelle 30 mit dem Kamera-Buscontroller 25 verbunden sein kann, um die Bilddaten BD über das USB-Kabel 50 anhand von USB-Nachrichten UN zu übertragen.

Zur Anbindung einer jeweiligen Kamera 20A, 20B und 20C weist die Übertragungseinrichtung 60 Übertragung-Anschlusskontakte 66 auf, die von einem Übertragung-Buscontroller 65 angesteuert werden. Die Übertragung-Anschlusskontakte 66 und der Übertragung-Buscontroller 65 bilden Bestandteile einer Übertragung-USB-Busschnittstelle 64.

Die Kamera 20, das USB-Kabel 50 sowie die Übertragungseinrichtung 60 weisen beispielsweise zur Übertragung der Bilddaten BD USB-Schnittstellenmittel auf, mit denen beispielsweise nach dem USB-2.0-Standard und/oder dem USB-3.0-Standard übertragen werden kann.

So ist beispielsweise bei Kamera-Anschlusskontakten 26 ein Busleitungsanschlusspaar 31 vorgesehen, welches mit einem Busleitungsanschlusspaar 71 der Übertragungseinrichtung 60 verbindbar ist. Zwischen den Busleitungsanschlusspaaren 31, 71, die beispielsweise dem USB-2.0-Standard entsprechen, also beispielsweise eine USB-2.0-Schnittstelle bilden, sind USB-Daten-Busleitungen 51, beispielsweise RX- und TX-Leitungen bzw. Sende- und Empfangsleitungen (bezogen auf die Kamera 20), vorgesehen.

Weiterhin hat die Kamera 20 zweckmäßigerweise noch mindestens eine weitere USB-Schnittstelle, z.B. USB-Schnittstellen 32, 33, zur Übertragung von Bilddaten BD, die mit USB-Schnittstellen 72, 73 verbindbar sind, beispielsweise über USB-Daten-Busleitungen 52, 53 oder USB-Daten-Busleitungspaare, des USB-Kabels 50.

Somit können also effektiv über insgesamt drei USB-Verbindungen, von denen eine dem USB-2.0-Standard entspricht und die beiden anderen dem USB-3.0-Standard entsprechen Bilddaten BD mit großer Geschwindigkeit von einer Kamera 20A, 20B und 20C zur Übertragungseinrichtung 60 und von dieser weiter zur Kommunikationseinrichtung 11 übertragen werden.

Die Busleitungsanschlusspaare 31 entsprechen beispielsweise den Anschlusskontakten D+ und D- in Figur 2. Die Schnittstellen 32, 33 bzw. 72, 73 nützen beispielsweise die Anschlusskontakte TX1+, TX1, sowie RX1+ und RX1- und darüber hinaus TX2+ und TX2- sowie RX2- und RX2+.

Neben dieser schnellen Datenübertragung ist auch eine Stromversorgung der Kameras 20A, 20B und 20C über ein jeweiliges USB-Kabel 50A, 50B und 50C möglich. Beispielsweise hat die jeweilige Kamera 20 eine Versorgungsschnittstelle 34 zum Anschluss von Versorgungsleitungen 54 des USB-Kabels 50. Die Versorgungsleitungen 54 ihrerseits wiederum sind an eine Versorgungsschnittstelle 74 der Übertragungseinrichtung 60 anschließbar, die einen Bestandteil der Übertragung-USB-Busschnittstellen 64A, 64B und 64C bildet.

Die Versorgungsschnittstellen 74 sind beispielsweise mit einer Stromversorgungseinrichtung 82 über Stromversorgungsleitungen 83 verbunden. Über die Stromversorgungseinrichtung 82, die beispielsweise Anschlusskontakte für eine externe Stromversorgung und/oder ein Netzgerät oder dergleichen umfasst, kann elektrische Energie oder eine elektrische Versorgungsspannung in die Übertragungseinrichtung 60 eingespeist und an die Kameras 20A, 20B und 20C übertragen werden.

Die Versorgungsleitungen 54 sind beispielsweise mit Anschlusskontakten GND bzw. VBus der Anschlusskontakte 26, 66 zu verbinden.

Man erkennt also, dass für eine effektiven und einen geringen Verdrahtungsaufwand erforderlichen Betrieb der Kameras 20A, 20B und 20C gesorgt ist.

Darüber hinaus sind die Kameras 20 komfortabel über die Busleitungen bzw. die USB-Kabel 50A, 50B und 50C mit Triggersignalen ansteuerbar, bei denen der jeweilige Sensor 23 Bilddaten BD erfasst und über das jeweilige USB-Kabel 50 an die Übertragungseinrichtung 60 und mithin an die Kommunikationseinrichtung 11 überträgt.

Wenn also beispielsweise die Steckverbinder 57A, 57B mit den korrespondierenden Steckverbindern 37 und 77 der Kamera 20 und der Übertragungseinrichtung 60 verbunden sind, ist gleichzeitig auch eine Kommunikationsverbindung für Triggersignale geschaffen. Dies geschieht wie folgt:
Das USB-Kabel 50A, 50B und 50C umfasst jeweils eine Übertragungsleitung 55 sowie eine Konfigurationsleitung 58. Bei der Übertragungsleitung 55 handelt es sich beispielsweise um eine SBU-Leitung, für die Anschlusskontakte SBU1 und SBU2 vorgesehen sind. Einer der Anschlusskontakte SBU1, SBU2 würde ausreichen.

Die Konfigurationsleitungen 58 sind beispielsweise sogenannte CC-Leitungen für die Anschlüsse CC1 und CC2 bei den Anschlusskontakten 26, 66 vorgesehen sind.

Die Übertragungseinrichtung 60 weist beispielsweise einen Konfigurationscontroller 76 auf, welcher seinerseits über einen Konfigurationsleitungsanschluss 78 mit der Konfigurationsleitung 58 und mithin dem Konfigurationsleitungsanschluss 38 verbindbar ist.

Der Konfigurationscontroller 76 sendet beispielsweise über die Konfigurationsleitung 58 eine Konfigurationsnachricht K1 mit der er bei dem Konfigurationscontroller 36 abfragt, ob die Übertragungsleitung 55 zur Übertragung von Triggersignalen konfigurierbar ist. Mit einer Antwortnachricht und somit einer weiteren Konfigurationsnachricht K2 antwortet der Kommunikationscontroller 36, dass dies möglich ist. Sodann sendet der Kommunikationscontroller 76 eine Konfigurationsnachricht K3, mit der er die Übertragungsleitung 58 als eine Übertragungsleitung zur Übertragung von Triggersignalen konfiguriert. Somit sind Übertragungsanschlüsse 35, 75 der Kamera 20 und der Übertragungseinrichtung 60 zum Übertragen eines Triggersignals TS konfiguriert. Beispielsweise können nun mit dem Triggersignal TS Triggerimpulse T1, T2 und T3 (und weitere Triggerimpulse) übertragen werden, mit denen jeweils der Sensor 23 zur Ausgabe von Bilddaten BD an die Datenschnittstelle 30 getriggert wird. Das Triggersignal TS wird beispielsweise über eine Triggerschnittstelle 39 an den Sensor 23 und/oder den Bildprozessor 27 übertragen.

Grundsätzlich möglich ist es, dass beispielsweise der Konfigurationscontroller 36 sozusagen spontan tätig wird, wenn das USB-Kabel 50 eingesteckt ist, d.h. der Kamera-USB-Buscontroller 25 erkennt, dass die Verbindung mit dem Übertragung-Buscontroller 65 hergestellt ist und dann spontan eine Konfigurationsnachricht, beispielsweise in der Art der Konfigurationsnachricht K2 an den Konfigurationscontroller 76 sendet, um eine Freigabe zum Belegen beispielsweise der Übertragungsleitung 55 für das Triggersignal TS einzuholen.

Die Kameras 20A, 20B und 20C können über die USB-Kabel 50A, 50B und 50C wie erläutert Bilddaten BD an die Übertragungseinrichtung 60 übertragen. Diese gibt die Bilddaten BD über eine Sammel-USB-Busschnittstelle 62 aus, an die die Kommunikationseinrichtung 11 beispielsweise über die USB-Verbindung 18 angeschlossen ist. Die Übertragung-USB-Busschnittstellen 64A, 64B und 64C sind beispielsweise über Daten-Busleitungen 61A, 61B und 61C mit der Sammel-USB-Busschnittstelle 62 verbunden.

Die einzelnen Triggersignale für die Kameras 20A, 20B und 20C können jedoch komfortabel an Triggeranschlüssen 67, 68, 69 ausgelöst werden, die bei der Übertragungseinrichtung 60 vorgesehen sind. Die Triggeranschlüsse 67-69 umfassen beispielsweise elektrische Anschlusskontakte, an die Trigger-Geber G1, G2 und G3 anschließbar sind. Beispielsweise senden die Trigger-Geber G1, G2 und G3 digitale Triggersignale.

Die Triggeranschlüsse 67 könnten nun direkt mit den jeweiligen Übertragung-USB-Busschnittstellen 64A, 64B und 64C verbunden sein. Vorliegend sind sie jedoch nicht direkt mit diesen verbunden, sondern über galvanische Trennelemente 88, beispielsweise Optokoppler. Diese Optokoppler 88 oder galvanischen Trennelemente sind ihrerseits wiederum anhand von Leitungen 80A, 80B und 80C mit einer Matrixlogik 79 verbunden. Mit der Matrixlogik 79 könnte nebenbei bemerkt auch die Stromversorgungseinrichtung 82 verbunden sein. Die Matrixlogik 79 ihrerseits wiederum ist über Leitungen 81A, 81B und 81C mit der jeweiligen Übertragung-USB-Busschnittstelle 64A, 64B und 64C verbunden. Somit können die einzelnen Triggersignale, die durch die Triggergeber G1, G2 und G3 vorgegeben werden, über die Matrixlogik 79 den jeweiligen Übertragung-USB-Busschnittstellen 64A, 64B und 64C zugeordnet sein.

Die Kommunikationseinrichtung 11 kann dazu ausgestaltet sein, die Matrixlogik 79 zu konfigurieren, z.B. anhand eine Parametrierung über die Sammel-USB-Busschnittstelle 62.

An dieser Stelle sei erwähnt, dass selbstverständlich auch andere Leitungen des USB-Kabels 50 für die Übertragung des Triggersignals TS auf dem genannten Weg konfigurierbar sind, beispielsweise die USB-Daten-Busleitungen 52 und/oder 53 oder jedenfalls eines der Leitungspaares davon.

Es ist also möglich, dass beispielsweise auf den USB-Daten-Busleitungen 52 und/oder 53 anstelle von USB-Nachrichten UN das Triggersignal TS übertragen wird.

Die USB-Nachrichten UN enthalten zweckmäßigerweise die Bilddaten BD, können aber auch Steuerungsinformationen etc., die zwischen beispielsweise der Kommunikationseinrichtung 10 oder der Übertragungseinrichtung 60 einerseits und andererseits der Kamera 20A, 20B oder 20C übertragen werden, enthalten.

An die Konfigurationsleitung 58 ist optional ein Konfigurationscontroller 56 des USB-Kabels 50 angeschlossen. An dieser Stelle sei erwähnt, dass auch weitere, in der Zeichnung nicht dargestellte Konfigurationscontroller in die USB-Verbindung zwischen der Kamera 20 und der Übertragungseinrichtung 60 geschaltet sein können. Jedenfalls lässt der Konfigurationscontroller 56 die Konfigurationsnachrichten K1, K2 und K3 unverändert und hört diese allenfalls mit.

In der obigen Beschreibung wurde erläutert, dass die Übertragungseinrichtung 60 eine jeweilige Kamera 20A, 20B oder 20C zum Empfang von Triggersignalen über das jeweilige USB-Kabel 50A-50C konfiguriert.

Aber auch die umgekehrte Kommunikationsrichtung zur Konfiguration und/oder zur Übertragung von Triggersignalen, nämlich von einer jeweiligen Kamera zur Übertragungseinrichtung, ist ohne weiteres möglich.

So ist es beispielsweise möglich, dass die Kamera 20 wie in Fig. 3 schematisch angedeutet eine Konfigurationsnachricht K6 sendet, um beispielsweise die Übertragungsleitung 55 zur Übertragung des Triggersignals TS zu konfigurieren.

Weiterhin ist möglich, dass die Kamera 20 eine Triggerschnittstelle 139 zur Ausgabe eines Triggersignals FS aufweist. Dieses Triggersignal könnte nun prinzipiell von der Kamera 20 direkt über eine separate Leitung beispielsweise zu einem Trigger-Nutzer, z.B. einem Blitzgerät, einer Beleuchtungseinrichtung, oder dergleichen ausgegeben werden. Vorliegend ist jedoch eine Übertragung über das USB-Kabel 50 vorteilhaft vorgesehen. So kann beispielsweise die Übertragungseinrichtung 60 und/oder die Kamera 20 den Übertragungsanschluss 135 und den Übertragungsanschluss 175 der Übertragungseinrichtung 60, die über eine Übertragungsleitung 155 des USB-Kabels 50 miteinander verbunden sind, zur Übertragung eines Triggersignals FS, welches die Kamera 20 ausgibt, konfigurieren. Das Triggersignal FS enthält beispielhaft dargestellte Triggerimpulse F1, F2 und F3 sowie nicht dargestellte weitere Triggerimpulse. Bei der Übertragungsleitung 155 handelt es sich vorzugsweise um eine SBU-Leitung, die die Anschlusskontakte SBU1 und SBU2 verbindet.

An dieser Stelle sei erwähnt, dass beispielsweise die Anschlusskontakte SBU1 für die Übertragungsleitung 55, die Anschlusskontakte SBU2 für die Übertragungsleitung 155 bzw. zur Übertragung der Triggersignale TS und FS nutzbar sind.

Die Übertragungseinrichtung 60 kann das Triggersignal FS beispielsweise über die Matrixlogik 79 einem oder mehreren Triggeranschlüsse 167, 168 und 169 zuordnen.

An die Triggeranschlüsse 167, 168, 169 sind beispielsweise Trigger-Empfänger N1, N2 und N3, zum Beispiel Blitzgeräte oder Beleuchtungseinrichtungen, weitere Kameras oder dergleichen, angeschlossen.

Zwischen die Matrixlogik 79 und die Triggeranschlüsse 167-169 sind vorzugsweise galvanische Trennelemente 188, insbesondere Optokoppler, geschaltet. Die galvanischen Trennelemente 188 sind anhand von Leitungen 180A, 180B und 180C mit der Matrixlogik 79 verbunden. So kann beispielsweise ein an der Übertragung-USB-Busschnittstelle 64A, 64B oder 64C empfangenes Triggersignal FS einer der Kameras 20A, 20B oder 20C über Leitungen 181A, 181B und 181C zur Matrixlogik 79 "geroutet" oder übertragen werden. Die Matrixlogik 79 leitet das jeweilige Triggersignal FS an einen oder mehrere der Triggeranschlüsse 167, 168 und 169 weiter.

Die Matrixlogik 79 ist zweckmäßigerweise über die Sammel-USB-Busschnittstelle 62 durch die Kommunikationseinrichtung 11 konfigurierbar, beispielsweise um die an den Übertragung-USB-Busschnittstellen 64A, 64B und 64C empfangenen Triggersignale FS einen der Triggeranschlüsse 167-169 zuzuordnen. Beispielsweise ist dazu ein Mikroprozessor 90 vorgesehen, welcher über eine Leitung 91 mit der Sammel-USB-Busschnittstelle 67 kommuniziert. Der Mikroprozessor 90 kann Konfigurationsnachrichten zur Einstellung der Matrixlogik 79 von der Kommunikationseinrichtung 11 empfangen und diese sozusagen konfigurieren.

Es ist weiterhin möglich, dass die Matrixlogik 79 dazu dient, ein von einer Kamera 20A, 20B oder 20C empfangenes Triggersignal FS an eine andere Kamera 20A, 20B oder 20C über das jeweilige USB-Kabel 50A, 50B und 50C auszugeben. So kann beispielsweise die Kamera 20A das Triggersignal FS an die Übertragung-USB-Busschnittstelle 64A übertragen, welches über die Leitungen 181A und 181B sowie die dazwischen geschaltete Matrixlogik 79 zur Übertragung-USB-Busschnittstelle 64B gelangt, um die Kamera 20B anzusteuern. Wenn also die Kamera 20A auslöst bzw. Bilder erfasst, kann sie simultan die Kamera 20B anhand des Triggersignals FS zur Auslösung bzw. Bilderfassung ansteuern.

Weiterhin ist es möglich, dass nicht die Übertragungseinrichtung 60, sondern beispielsweise eine übergelagerte Einrichtung, insbesondere die Kommunikationseinrichtung 11, die jeweiligen Übertragung-USB-Busschnittstellen 64 zum Senden und/oder Empfangen der Triggersignale TS und FS oder beiden konfiguriert oder zumindest nutzbar macht. So ist es beispielsweise möglich, dass die Übertragungseinrichtung 11 über die Sammel-USB-Schnittstelle 62 eine Konfigurationsnachricht K4 sendet, welches der Mikroprozessor 90 über die Matrixlogik 79 an eine der Übertragung-USB-Busschnittstellen 64A, 64B oder 64C zur Konfiguration der Übertragungsleitung 55 als Leitung zur Übertragung des Triggersignals TS sendet. Die Kamera 20A, 20B oder 20C antwortet mit einer Konfigurationsnachricht K5, welche der Mikroprozessor 90 über die Sammel-USB-Busschnittstelle 62 an die Kommunikationseinrichtung 11 weiterleitet. Die Konfigurationsnachrichten K4 und K5 sind lediglich exemplarisch für eine gegebenenfalls umfangreichere Konfigurations-Korrespondenz oder Konfigurationsnachrichtensequenz zu verstehen.

Nun kann es möglich sein, dass beispielsweise die Übertragung-USB-Busschnittstellen Buscontroller aufweisen, die nicht speziell zur Übertragung des Triggersignals TS oder FS konfigurierbar sind, beispielsweise weil der sogenannte Alternate-Modus nicht bei diesen Busschnittstellen vorhanden ist. In diesem Fall ist dennoch eine Konfiguration der Übertragungsleitungen 55, 155 für die Triggersignale TS, FS möglich. Beispielsweise kann der Prozessor 90 über die Sammel-USB-Busschnittstelle 62, die in diesem Fall eine Konfigurationsschnittstelle 92 darstellt, die Matrixlogik 79 entsprechend konfigurieren. Wenn also beispielsweise am Triggereingang 67 ein Triggersignal TS empfangen wird, wird dieses von der Matrixlogik 79 über die Leitung 81A zur Übertagung-USB-Busschnittstelle 64A weitergeleitet, welche ihrerseits das Triggersignal TS am Übertragungsanschluss 75, dem Triggerausgang bzw. dem Anschluss für die Übertragungsleitung 55 ausgibt. Eine Zuordnung eines jeweiligen Übertragungsanschlusses zu einem Eingang einer Übertragung-USB-Busschnittstelle ist also beispielsweise durch den Prozessor 90, jedenfalls über die USB-Schnittstelle 62 möglich. So ist beispielsweise denkbar, dass die Kommunikationseinrichtung 11 über einen proprietären Treiber erkennt, dass die Übertragungseinrichtung 60 und/oder die Kamera 20 in der Lage ist, zur Übertragung der Triggersignale TS, FS auf einer Übertragungsleitung des USB-Kabels 50 konfigurierbar ist.

## Patentansprüche

1. System zur Erfassung und digitalen Übertragung von Bilddaten (BD), wobei das System umfasst:
- eine Kamera (20)
mit einem Sensor (23) zur digitalen Erfassung von Bilddaten (BD),
mit einer einen Kamera-Buskontroller (25) und Kamera-Anschlusskontakte (26) für ein USB-Kabel (50) umfassenden Kamera-USB-Busschnittstelle (24), die mindestens ein Busleitungsanschlusspaar (31) zum Anschluss von USB-Daten-Busleitungen zum digitalen Senden der Bilddaten (BD) als USB-Nachrichten (UN) aufweist, wobei die Kamera (20) zu einer Erfassung der Bilddaten (BD) durch den Sensor (23) anhand eines Triggersignals (TS, FS) ansteuerbar ist,
- eine Übertragungseinrichtung (60) mit einer einen Übertragung-Buskontroller (65) und Übertragung-Anschlusskontakte (66) für ein USB-Kabel (50) umfassenden Übertragung-USB-Busschnittstelle (64), die mindestens ein Busleitungsanschlusspaar (71) zum Anschluss von USB-Daten-Busleitungen zum digitalen Empfangen von Bilddaten (BD) als USB-Nachrichten (UN) aufweist, wobei der Übertragung-Buskontroller (65) zum Senden des Triggersignals (TS, FS) und der Kamera-Buskontroller (25) zum Empfangen des Triggersignals (TS, FS) ausgestaltet sind und der Kamera-Buskontroller (25) zur Ansteuerung des Sensors (23) anhand des Triggersignals (TS, FS) ausgestaltet ist und/oder wobei der Kamera-Buskontroller (25) zum Senden des Triggersignals (FS) und der Übertragung-Buskontroller (65) zum Empfangen des Triggersignals (FS) ausgestaltet sind und der Übertragung-Buskontroller (65) zur Ausgabe des Triggersignals (FS) ausgestaltet ist, wobei die Kamera-Anschlusskontakte (26) und die Übertragung-Anschlusskontakte (66) jeweils einen Konfigurationsleitungsanschluss (38, 78) zum Anschluss einer Konfigurationsleitung (58) des USB-Kabels (50) und jeweils einen Übertragungsanschluss (35, 75) für eine Übertragungsleitung (55) des USB-Kabels (50) aufweisen, wobei die Übertragungsleitung (55) zweckmäßigerweise eine nicht für USB-Busnachrichten nutzbare Leitung ist und der Übertragung-Buskontroller (65) und der Kamera-Buskontroller (25) zum Senden und Empfangen von Konfigurationsnachrichten (K1, K2, K3) über den jeweiligen Konfigurationsleitungsanschluss (38, 78) ausgestaltet sind, und wobei das USB-Kabel (50) und die Kamera-Anschlusskontakte (26) und die Übertragung-Anschlusskontakte (66) dem USB-3.1-Standard oder dem USB Typ-C-Standard entsprechen, **dadurch gekennzeichnet, dass** der Übertragungsanschluss (35) der Kamera-Anschlusskontakte (26) und der Übertragungsanschluss (75) der Übertragung-Anschlusskontakte (66) für die Übertragungsleitung (55) zum Übertragen des Triggersignals (TS, FS) anhand der Konfigurationsnachrichten (K1, K2, K3) konfigurierbar sind.

2. System nach Anspruch 1, **dadurch gekennzeichnet, dass** die Übertragungsleitung (55) eine sekundäre Busleitung und/oder nicht dem USB-2.0-Standard entsprechende Leitung ist oder umfasst.

3. System nach Anspruch 1 oder 2, **dadurch gekennzeichnet, dass** die Übertragungsleitung (55) mindestens eine für USB-Busnachrichten nutzbare Übertragungsleitung (55) umfasst oder ist.

4. System nach einem der vorhergehenden Ansprüche, **dadurch gekennzeichnet, dass** die Kamera-Anschlusskontakte (26) und/oder die Übertragung-Anschlusskontakte (66) Anschlusskontakte für eine elektrische Energieübertragung oder Stromversorgung der Kamera (20) über das USB-Kabel (50) aufweisen.

5. System nach einem der vorhergehenden Ansprüche, **dadurch gekennzeichnet, dass** die Konfigurationsleitung (58) eine Busleitung ist und die Konfigurationsnachrichten (K1, K2, K3) Nicht-USB-Nachrichten (UN) und/oder USB-Busnachrichten sind.

6. Übertragungseinrichtung (60), insbesondere Hub oder Dock, des Systems nach einem der vorhergehenden Ansprüche.

7. Übertragungseinrichtung nach Anspruch 6, **dadurch gekennzeichnet, dass** sie mindestens einen Triggeranschluss (67, 68, 69, 167, 168, 169) zum Einspeisen eines Triggersignals und/oder zum Ausgeben eines Triggersignals aufweist, wobei der Triggeranschluss (67, 68, 69) mit dem Übertragungsanschluss (35, 75) verbunden oder verknüpft oder verbindbar ist, wobei vorteilhaft vorgesehen ist, dass zwischen dem mindestens einen Triggeranschluss (67, 68, 69, 167, 168, 169) und dem Übertragungsanschluss (35, 75) ein galvanisches Trennelement (88), insbesondere ein Optokoppler, angeordnet ist.

8. Übertragungseinrichtung nach einem der Ansprüche 6 oder 7, **dadurch gekennzeichnet, dass** sie eine Stromversorgungseinrichtung (82) zur Bereitstellung einer Stromversorgung für mindestens eine an die Übertragung-USB-Busschnittstelle (62) angeschlossene Kamera (20) aufweist.

9. Übertragungseinrichtung nach einem der Ansprüche 6 bis 8, **dadurch gekennzeichnet, dass** sie eine Sammel-USB-Busschnittstelle (62) zum Anschluss einer Kommunikationseinrichtung (11) aufweist, wobei die Sammel-USB-Busschnittstelle (62) mit mindestens zwei Übertragung-USB-Busschnittstellen (64) zum Anschließen von zwei Kameras (20A, 20B) gemäß Anspruch 1 verbunden ist, wobei über die Sammel-USB-Busschnittstelle (62) an den Übertragung-USB-Busschnittstellen (64) empfangene Bilddaten (BD) der jeweiligen Kameras (20) an die Kommunikationseinrichtung (11) übertragbar sind.

10. Übertragungseinrichtung nach einem der Ansprüche 6 bis 9, **dadurch gekennzeichnet, dass** sie mindestens zwei Übertragung-USB-Busschnittstellen (64A, 64B, 64C) zum Anschließen von zwei Kameras (20) gemäß Anspruch 1 aufweist, wobei vorteilhaft vorgesehen ist, dass zwischen den mindestens zwei Übertragung-USB-Busschnittstellen (64A, 64B, 64C) eine Matrixlogik (79) angeordnet ist, über die die Übertragung-USB-Busschnittstellen (64A, 64B, 64C) einander und/oder mindestens einem Triggeranschluss (67, 68, 69, 167, 168, 169) und/oder mindestens einer Sammel-USB-Busschnittstelle (62) zum Anschluss einer Kommunikationseinrichtung (11) zuordenbar sind.

11. Übertragungseinrichtung nach einem der Ansprüche 6 bis 10, **dadurch gekennzeichnet, dass** sie mindestens zwei Triggeranschlüsse (67, 68, 69, 167, 168, 169) zum Einspeisen und/oder zum Ausgeben von Triggersignalen aufweist und zwischen den mindestens zwei Triggeranschlüssen (67, 68, 69, 167, 168, 169) und mindestens einer Übertragung-USB-Busschnittstelle eine Matrixlogik (79) angeordnet ist, über welche die Triggeranschlüsse (67, 68, 69, 167, 168, 169) der mindestens einen Übertragung-USB-Schnittstelle (64) zuordenbar sind.

12. Übertragungseinrichtung nach einem der Ansprüche 6 bis 11, **dadurch gekennzeichnet, dass** sie eine Konfigurationsschnittstelle (92) zur Konfiguration der mindestens einen Übertragung-USB-Busschnittstelle (64) zum Übertragen des Triggersignals (TS, FS) und/oder zur Durchleitung der Konfigurationsnachrichten (K1, K2, K3) von und oder zu der Übertragung-USB-Busschnittstelle (64) aufweist.

13. Übertragungseinrichtung nach Anspruch 12, **dadurch gekennzeichnet, dass** über die Konfigurationsschnittstelle (92) die Zuordnung des Übertragungsanschlusses (75) der Übertragung-USB-Busschnittstelle (64A) zu einem für eine Ausgabe und/oder einen Empfang des Triggersignals (TS, FS) vorgesehenen Triggeranschluss (88, 188) der Übertragungseinrichtung (60) und/oder zu einem Übertragungsanschluss (75) einer weiteren Übertragung-USB-Busschnittstelle (64B, 64C) konfigurierbar ist.

14. Kamera (20) des Systems nach einem der Ansprüche 1 bis 6.

15. Verfahren zur Erfassung und digitalen Übertragung von Bilddaten (BD) anhand eines Systems, welches umfasst:
- eine Kamera (20)
mit einem Sensor (23) zur digitalen Erfassung von Bilddaten (BD),
mit einer einen Kamera-Buskontroller (25) und Kamera-Anschlusskontakte (26) für ein USB-Kabel (50) umfassenden Kamera-USB-Busschnittstelle (24), die mindestens ein Busleitungsanschlusspaar (31) zum Anschluss von USB-Daten-Busleitungen zum digitalen Senden der Bilddaten (BD) als USB-Nachrichten (UN) aufweist, wobei die Kamera (20) zu einer Erfassung der Bilddaten (BD) durch den Sensor (23) anhand eines Triggersignals (TS, FS) ansteuerbar ist,
- eine Übertragungseinrichtung (60) mit einer einen Übertragung-Buskontroller (65) und Übertragung-Anschlusskontakte (66) für ein USB-Kabel (50) umfassenden Übertragung-USB-Busschnittstelle (64), die mindestens ein Busleitungsanschlusspaar (71) zum Anschluss von USB-Daten-Busleitungen zum digitalen Empfangen von Bilddaten (BD) als USB-Nachrichten (UN) aufweist, wobei das USB-Kabel (50) und die Kamera-Anschlusskontakte (26) und die Übertragung-Anschlusskontakte (66) dem USB-3.1-Standard oder dem USB Typ-C-Standard entsprechen und wobei die Kamera-Anschlusskontakte (26) und die Übertragung-Anschlusskontakte (66) jeweils einen Konfigurationsleitungsanschluss (38, 78) zum Anschluss der Konfigurationsleitung (58) aufweisen, wobei das Verfahren vorsieht:
- Senden und Empfangen des Triggersignals (TS, FS) durch den Übertragung-Buskontroller (65) und den Kamera-Buskontroller (25), und Ansteuerung des Sensors (23) anhand des Triggersignals (TS) durch den Kamera-Buskontroller (25) und/oder Ausgabe des Triggersignals (FS) durch den Übertragung-Buskontroller (65),
- Senden und Empfangen von Konfigurationsnachrichten (K1, K2, K3) durch den Übertragung-Buskontroller (65) und den Kamera-Buskontroller (25) über eine Konfigurationsleitung (58),
**dadurch gekennzeichnet, dass** ein Übertragungsanschluss (35, 75) der Kamera-Anschlusskontakte (26) und ein Übertragungsanschluss (35, 75) der Übertragung-Anschlusskontakte (66) für eine Übertragungsleitung (55), die zweckmäßigerweise eine nicht für USB-Busnachrichten nutzbare Leitung ist, zum Übertragen des Triggersignals (TS, FS) anhand der Konfigurationsnachrichten (K1, K2, K3) konfigurierbar sind.

## Claims

1. System for the detection and digital transmission of image data (BD), wherein the system comprises:
- a camera (20)
with a sensor (23) for the digital detection of image data (BD)
with a camera bus controller (25) and camera connection contacts (26) for a camera USB bus interface (24), including a USB cable (50), which has a bus line connection pair (31) for the connection of USB data bus lines for the digital sending of the image data (BD) as USB messages (UN), wherein the camera (20) may be activated to detect the image data (BD) by the sensor (23) with the aid of a trigger signal (TS, FS)
- a transmission device (60) with a transmission USB bus interface (64) comprising a transmission bus controller (65) and transmission connection contacts (66) for a USB cable (50) and having at least one bus line connection pair (71) for the connection of USB data bus lines for the digital receiving of image data (BD) as USB messages (UN), wherein the transmission bus controller (65) is designed for the sending of the trigger signal (TS, FS) and the camera bus controller (25) for receiving the trigger signal (TS, FS) and the camera bus controller (25) is designed for activation of the sensor (23) with the aid of the trigger signal (TS, FS), and/or wherein the camera bus controller (25) is designed for sending of the trigger signal (FS) and the transmission bus controller (65) for receiving the trigger signal (FS) and the transmission bus controller (65) is designed to output the trigger signal (FS), wherein the camera connection contacts (26) and the transmission connection contacts (66) each have a configuration line connection (38, 78) for connection of a configuration line (58) of the USB cable (50) and each have a transmission connection (35, 75) for a transmission line (55) of the USB cable (50), wherein the transmission line (55) is expediently a line not usable for USB bus messages and the transmission bus controller (65) and the camera bus controller (25) are designed for sending and receiving configuration messages (K1, K2, K3) over the relevant configuration line connection (38, 78), and wherein the USB cable (50) and the camera connection contacts (26) and the transmission connection contacts (66) conform to the USB-3.1 standard or the USB type C standard, **characterised in that** the transmission connection (35) of the camera connection contacts (26) and the transmission connection (75) of the transmission connection contacts (66) for the transmission line (55) may be configured to transmit the trigger signal (TS, FS) with the aid of the configuration messages (K1, K2, K3).

2. System according to claim 1, **characterised in that** the transmission line (55) is or includes a secondary bus line and/or a line not conforming to the USB-2.0 standard.

3. System according to claim 1 or 2, **characterised in that** the transmission line (55) includes or is at least one transmission line (55) which may be used for USB bus messages.

4. System according to any of the preceding claims, **characterised in that** the camera connection contacts (26) and/or the transmission connection contacts (66) have connection contacts for an electrical energy transmission or power supply of the camera (20) via the USB cable (50).

5. System according to any of the preceding claims, **characterised in that** the configuration line (58) is a bus line and the configuration messages (K1, K2, K3) are non-USB messages (UN) and/or USB bus messages.

6. Transmission device (60), in particular hub or dock, of the system according to any of the preceding claims.

7. Transmission device according to claim 6, **characterised in that** it has at least one trigger connection (67, 68, 69, 167, 168, 169) for feeding in a trigger signal and/or for output of a trigger signal, wherein the trigger connection (67, 68, 69) is connected or linked or may be connected to the transmission connection (35, 75), wherein it is advantageously provided that a galvanic separation element (88), in particular an optocouplers, is arranged between the trigger connection or connections (67, 68, 69, 167, 168, 169) and the transmission connection (35, 75).

8. Transmission device according to any of claims 6 or 7, **characterised in that** it has a power supply unit (82) for the provision of a power supply for at least one camera (20) connected to the collective USB bus interface (62).

9. Transmission device according to any of claims 6 to 8, **characterised in that** it has a collective USB bus interface (62) for the connection of a communications device (11), wherein the collective USB bus interface (62) is connected with at least two transmission USB bus interfaces (64) for the connection of two cameras (20A, 20B) in accordance with claim 1, wherein image data (BD) of the respective cameras (20) received over the collective USB bus interface (62) at the transmission USB bus interfaces (64) may be transmitted to the communications device (11).

10. Transmission device according to any of claims 6 to 9, **characterised in that** it has at least two transmission USB bus interfaces (64A, 64B, 64C) for the connection of two cameras (20) according to claim 1, wherein it is advantageously provided that between the transmission USB bus interfaces (64A, 64B, 64C), of which there are at least two, there is arranged a matrix logic (79), through which the transmission USB bus interfaces (64A, 64B, 64C) may be assigned to one another and/or to at least one trigger connection (67, 68, 69, 167, 168, 169) and/or at least one collective USB bus interface (62), for the connection of a communications device (11).

11. Transmission device according to any of claims 6 to 10, **characterised in that** it has at least two trigger connections (67, 68, 69, 167, 168, 169) for the feeding-in and/or output of trigger signals, and that there is provided between the two or more trigger connections (67, 68, 69, 167, 168, 169) and at least one transmission USB bus interface, a matrix logic (79) through which the trigger connections (67, 68, 69, 167, 168, 169) of the transmission USB bus interface or interfaces (64) may be assigned.

12. Transmission device according to any of claims 6 to 11, **characterised in that** it has a configuration interface (92) for the configuration of the transmission USB bus interface or interfaces (64) for transmission of the trigger signal (TS, FS) and/or for passing of the configuration messages (K1, K2, K3) from and/or to the transmission USB bus interface (64).

13. Transmission device according to claim 12 **characterised in that**, via the configuration interface (92), the assignment of the transmission connection (75) of the transmission USB bus interface (64A) to a trigger connection (88, 188) of the transmission device (60) provided for output and/or receipt of the trigger signal (TS, FS) and/or to a transmission connection (75) of a further transmission USB bus interface (64B, 64C) may be configured.

14. Camera (20) of the system according to any of claims 1 to 6.

15. Method for the detection and digital transmission of image data (BD), wherein the system comprises:
- a camera (20)
with a sensor (23) for the digital detection of image data (BD),
with a camera bus controller (25) and camera connection contacts (26) for a camera USB bus interface (24), including a USB cable (50), which has at least one bus line connection pair (31) for the connection of USB data bus lines for the digital sending of the image data (BD) as USB messages (UN), wherein the camera (20) may be activated to detect the image data (BD) by the sensor (23) with the aid of a trigger signal (TS, FS)
- a transmission device (60) with a transmission USB bus interface (64) comprising a transmission bus controller (65) and transmission connection contacts (66) for a USB cable (50) and having at least one bus line connection pair (71) for the connection of USB data bus lines for the digital receiving of image data (BD) as USB messages (UN), wherein the USB cable (50) and the camera connection contacts (26) and the transmission connection contacts (66) conform to the USB-3.1 standard or the USB type C standard, and the transmission connection contacts (66) have in each case a configuration line connection (38, 78) for connection of the configuration line (58), wherein the method provides for:
- sending and receiving of the trigger signal (TS, FS) by the transmission bus controller (65) and the camera bus controller (25), and activation of the sensor (23) with the aid of the trigger signal (TS) by the camera bus controller (25) and/or output of the trigger signal (FS) by the transmission bus controller (65),
- sending and receiving of configuration messages (K1, K2, K3) by the transmission bus controller (65) and the camera bus controller (25) over a configuration line (58), **characterised in that** a transmission connection (35, 75) of the camera connection contacts (26) and a transmission connection (35, 75) of the transmission connection contacts (66) for a transmission line (55), which is expediently a line not usable for USB bus messages, may be configured for transmission of the trigger signal (TS, FS) with the aid of the configuration messages (K1, K2, K3).

## Revendications

1. Système de détection et de transmission numérique de données d'image (BD), dans lequel le système comprend :
- une caméra (20)
avec un capteur (23) de détection numérique de données d'image (BD),
avec une interface de bus USB de caméra (24) comprenant un contrôleur de bus de caméra (25) et des contacts de raccordement de caméra (26) pour un câble USB (50), qui présente au moins une paire de raccordements de lignes de bus (31) pour le raccordement de lignes de bus de données USB pour l'envoi numérique des données d'image (BD) en tant que messages USB (UN), dans lequel la caméra (20) peut être pilotée pour une détection des données d'image (BD) par le capteur (23) à l'aide d'un signal de déclenchement (TS, FS),
- un dispositif de transmission (60) avec une interface de bus USB de transmission (64) comprenant un contrôleur de bus de transmission (65) et des contacts de raccordement de transmission (66) pour un câble USB (50), qui présente au moins une paire de raccordements de lignes de bus (71) pour le raccordement de lignes de bus de données USB pour la réception numérique de données d'image (BD) en tant que messages USB (UN), dans lequel le contrôleur de bus de transmission (65) est configuré pour l'envoi du signal de déclenchement (TS, FS) et le contrôleur de bus de caméra (25) est configuré pour la réception du signal de déclenchement (TS, FS) et le contrôleur de bus de caméra (25) est configuré pour le pilotage du capteur (23) à l'aide du signal de déclenchement (TS, FS), et/ou dans lequel le contrôleur de bus de caméra (25) est configuré pour l'envoi du signal de déclenchement (FS) et le contrôleur de bus de transmission (65) est configuré pour la réception du signal de déclenchement (FS) et le contrôleur de bus de transmission (65) est configuré pour l'émission du signal de déclenchement (FS), dans lequel les contacts de raccordement de caméra (26) et les contacts de raccordement de transmission (66) présentent respectivement un raccordement de ligne de configuration (38, 78) pour le raccordement d'une ligne de configuration (58) du câble USB (50) et respectivement un raccordement de transmission (35, 75) pour une ligne de transmission (55) du câble USB (50), dans lequel la ligne de transmission (55) est de manière opportune une ligne non utilisable pour des messages de bus USB et le contrôleur de bus de transmission (65) et le contrôleur de bus de caméra (25) sont configurés pour l'envoi et la réception de messages de configuration (K1, K2, K3) par l'intermédiaire du raccordement de ligne de configuration (38, 78) concerné, et dans lequel le câble USB (50) et les contacts de raccordement de caméra (26) et les contacts de raccordement de transmission (66) correspondent à la norme USB 3.1 ou à la norme USB Type C, **caractérisé en ce que** le raccordement de transmission (35) des contacts de raccordement de caméra (26) et le raccordement de transmission (75) des contacts de raccordement de transmission (66) pour la ligne de transmission (55) peuvent être configurés pour la transmission du signal de déclenchement (TS, FS) à l'aide des messages de configuration (K1, K2, K3).

2. Système selon la revendication 1, **caractérisé en ce que** la ligne de transmission (55) est ou comprend une ligne de bus secondaire et/ou une ligne ne correspondant pas à la norme USB-2.0.

3. Système selon la revendication 1 ou 2, **caractérisé en ce que** la ligne de transmission (55) comprend ou est au moins une ligne de transmission (55) utilisable pour des messages de bus USB.

4. Système selon l'une quelconque des revendications précédentes, **caractérisé en ce que** les contacts de raccordement de caméra (26) et/ou les contacts de raccordement de transmission (66) présentent des contacts de raccordement pour une transmission d'énergie électrique ou une alimentation en courant de la caméra (20) par l'intermédiaire du câble USB (50).

5. Système selon l'une quelconque des revendications précédentes, **caractérisé en ce que** la ligne de configuration (58) est une ligne de bus et les messages de configuration (K1, K2, K3) sont des messages non USB (UN) et/ou des messages de bus USB.

6. Dispositif de transmission (60), en particulier concentrateur (hub) ou station d'accueil (dock), du système selon l'une quelconque des revendications précédentes.

7. Dispositif de transmission selon la revendication 6, **caractérisé en ce qu'**il présente au moins un raccordement de déclenchement (67, 68, 69, 167, 168, 169) pour injecter un signal de déclenchement et/ou pour émettre un signal de déclenchement, dans lequel le raccordement de déclenchement (67, 68, 69) est relié ou combiné ou peut être relié au raccordement de transmission (35, 75), dans lequel il est prévu avantageusement qu'un élément de séparation (88) galvanique, en particulier un optocoupleur, est disposé entre l'au moins un raccordement de déclenchement (67, 68, 69, 167, 168, 169) et le raccordement de transmission (35, 75).

8. Dispositif de transmission selon l'une quelconque des revendications 6 ou 7, **caractérisé en ce qu'**il présente un dispositif d'alimentation en courant (82) pour fournir une alimentation en courant pour au moins une caméra (20) raccordée à l'interface de bus USB de transmission (62).

9. Dispositif de transmission selon l'une quelconque des revendications 6 à 8, **caractérisé en ce qu'**il présente une interface de bus USB de collecte (62) pour raccorder un dispositif de communication (11), dans lequel l'interface de bus USB de collecte (62) est reliée à au moins deux interfaces de bus USB de transmission (64) pour raccorder deux caméras (20A, 20B) selon la revendication 1, dans lequel des données d'image (BD) des caméras (20) respectives reçues sur les interfaces de bus USB de transmission (64) peuvent être transmises au dispositif de communication (11) par l'intermédiaire de l'interface de bus USB de collecte (62).

10. Dispositif de transmission selon l'une quelconque des revendications 6 à 9, **caractérisé en ce qu'**il présente au moins deux interfaces de bus USB de transmission (64A, 64B, 64C) pour raccorder deux caméras (20) selon la revendication 1, dans lequel il est prévu avantageusement qu'est disposée entre les au moins deux interfaces de bus USB de transmission (64A, 64B, 64C) une logique de matrice (79), par l'intermédiaire de laquelle les interfaces de bus USB de transmission (64A, 64B, 64C) peuvent être associées les unes aux autres et/ou à au moins un raccordement de déclenchement (67, 68, 69, 167, 168, 169) et/ou à au moins une interface de bus USB de collecte (62) pour le raccordement d'un dispositif de communication (11).

11. Dispositif de transmission selon l'une quelconque des revendications 6 à 10, **caractérisé en ce qu'**il présente au moins deux raccordements de déclenchement (67, 68, 69, 167, 168, 169) pour injecter et/ou pour émettre des signaux de déclenchement et une logique de matrice (79), par l'intermédiaire de laquelle les raccordements de déclenchement (67, 68, 69, 167, 168, 169) peuvent être associés à l'au moins une interface USB de transmission (64), est disposée entre les au moins deux raccordements de déclenchement (67, 68, 69, 167, 168, 169) et au moins une interface de bus USB de transmission.

12. Dispositif de transmission selon l'une quelconque des revendications 6 à 11, **caractérisé en ce qu'**il présente une interface de configuration (92) pour la configuration de l'au moins une interface de bus USB de transmission (64) pour transférer le signal de déclenchement (TS, FS) et/ou pour acheminer les messages de configuration (K1, K2, K3) depuis ou vers l'interface de bus USB de transmission (64).

13. Dispositif de transmission selon la revendication 12, **caractérisé en ce que** l'association du raccordement de transmission (75) de l'interface de bus USB de transmission (64A) à un raccordement de déclenchement (88, 188), prévu pour une émission et/ou une réception du signal de déclenchement (TS, FS), du dispositif de transmission (60) et/ou à un raccordement de transmission (75) d'une autre interface de bus USB de transmission (64B, 64C) peut être configurée par l'intermédiaire de l'interface de configuration (92).

14. Caméra (20) du système selon l'une quelconque des revendications 1 à 6.

15. Procédé de détection et de transmission numérique de données d'image (BD) à l'aide d'un système, lequel comprend :
- une caméra (20)
avec un capteur (23) de détection numérique de données d'image (BD),
avec une interface de bus USB de caméra (24) comprenant un contrôleur de bus de caméra (25) et des contacts de raccordement de caméra (26) pour un câble USB (50), qui présente au moins une paire de raccordements de lignes de bus (31) pour le raccordement de lignes de bus de données USB pour l'envoi numérique des données d'image (BD) en tant que messages USB (UN), dans lequel la caméra (20) peut être pilotée pour une détection des données d'image (BD) par le capteur (23) à l'aide d'un signal de déclenchement (TS, FS),
- un dispositif de transmission (60) avec une interface de bus USB de transmission (64) comprenant un contrôleur de bus de transmission (65) et des contacts de raccordement de transmission (66) pour un câble USB (50), qui présente au moins une paire de raccordements de lignes de bus (71) pour le raccordement de lignes de bus de données USB pour la réception numérique de données d'image (BD) en tant que messages USB (UN), dans lequel le câble USB (50) et les contacts de raccordement de caméra (26) et les contacts de raccordement de transmission (66) correspondent à la norme USB-3.1 ou à la norme USB de type C et dans lequel les contacts de raccordement de caméra (26) et les contacts de raccordement de transmission (66) présentent respectivement un raccordement de ligne de configuration (38, 78) pour le raccordement de la ligne de configuration (58), dans lequel le procédé prévoit :
- l'envoi et la réception du signal de déclenchement (TS, FS) par le contrôleur de bus de transmission (65) et le contrôleur de bus de caméra (25), et le pilotage du capteur (23) à l'aide du signal de déclenchement (TS) par le contrôleur de bus de caméra (25) et/ou l'émission du signal de déclenchement (FS) par le contrôleur de bus de transmission (65),
- l'envoi et la réception de messages de configuration (K1, K2, K3) par le contrôleur de bus de transmission (65) et le contrôleur de bus de caméra (25) par l'intermédiaire d'une ligne de configuration (58),
**caractérisé en ce qu'**un raccordement de transmission (35, 75) des contacts de raccordement de caméra (26) et un raccordement de transmission (35, 75) des contacts de raccordement de transmission (66) pour une ligne de transmission (55) qui est de manière opportune une ligne non utilisable pour des messages de bus USB, peuvent être configurés pour transmettre le signal de déclenchement (TS, FS) à l'aide des messages de configuration (K1, K2, K3).
